# EUROPEAN PATENT APPLICATION

(11) **EP 3 200 048 A2**
(43) Date of publication of application: **02.08.2017**
(21) Application number: 17153729.3
(22) Date of filing: 30.01.2017
(51) Int. Cl.: G06F 3/01, G06F 3/0482

(54) **IMAGE DISPLAY APPARATUS**

(30) Priority: 01.02.2016 JP 2016017005
(71) Applicant: Alps Electric Co., Ltd., Tokyo 145-8501 (JP)
(72) Inventor: Tomiyama, Tatsuhiro, Tokyo 145-8501 (JP); Makinouchi, Takumi, Tokyo 145-8501 (JP); Abe, Takuya, Tokyo 145-8501 (JP); Hoshi, Toshiyuki, Tokyo 145-8501 (JP)
(74) Representative: Schmitt-Nilson Schraud Waibel Wohlfrom Patentanwälte Partnerschaft mbB

(57) **Abstract**

An image display apparatus (10) includes an image data processing unit (32) configured to generate image data for at least one information image, an image forming unit (40) configured to form the information image in a predetermined display area on an image forming plane based on the image data, an importance determination unit (33) configured to determine an importance of the information image, and a level control unit (34) configured to change an enhancement level of the information image based on a determination result of the importance determination unit.

## Description

### BACKGROUND OF THE INVENTION

### 1. Field of the Invention

The present invention relates to an image display apparatus capable of changing an enhancement level of an information image based on an importance level of the information image.

### 2. Description of the Related Art

Japanese Patent No. 1854955 discloses an in-vehicle head-up display apparatus including a prism shaped to change traveling directions of light rays to be reflected at points on a display image by a windshield toward left and right eyes of a driver in order to compensate for binocular disparity between left and right eye images. The prism eliminates problems arising from the binocular disparity. This enables the driver to view a clear display image without eye strain.

Japanese Unexamined Patent Application Publication No. 2005-338520 discloses an image display apparatus including semiconductor laser diodes (LDs), serving as a blue light source and a red light source, and a light-emitting diode (LED), serving as a green light source. The LDs and the LED are used to reduce the influence of speckle noise.

As will be described below, the in-vehicle head-up display apparatus disclosed in Japanese Patent No. 1854955 and the image display apparatus disclosed in Japanese Unexamined Patent Application Publication No. 2005-338520 hardly achieve image display that is highly perceived by a user.

Typically, humans tend to be unaware of visual information that is out of focus for both eyes. Specifically, humans are able to notice visual information outside their central visual field. However, the visual information outside the central visual field is less noticeable than visual information within the central visual field. Assuming that information displayed as an image is used to provide an alert, if the alert information is located outside the central visual field of a user, the user will notice the information with a time lag because the alert information is out of focus. Since the above-described apparatuses may provide an alert outside the central visual field of a user, namely, out of focus, these apparatuses hardly provide a quick alert with such information, leading to reduced perceived efficiency.

In the case where an LED is used as a light source for image display, a user can perceive details of a displayed image by directing his or her gaze to the image. In other words, the user will not tend to perceive the details of the displayed image unless the user directs his or her gaze to the displayed image and focuses his or her eyes on the image. Therefore, the user can selectively look at desired information at any timing. However, since the user does not tend to perceive information that the user does not direct his or her gaze to, the user may fail to notice high urgency information or information indicating danger.

In contrast, in the case where an LD is used as a light source for image display, a speckle produced by laser light, which is coherent light, is always formed as an image on the retinas of the eyes of a user. Consequently, the image displayed with laser light can be always perceived by the user. The user is less likely to fail to notice high urgency information or information indicating danger. However, since the user always perceives the displayed image, the user views information that does not need to be always perceived, for example, information indicated by instruments. Disadvantageously, this narrows the user's view and hinders the user from viewing an object that the user intends to view. If a displayed image is part of, for example, an augmented reality (AR) scene, the image may hide an object that actually exists or may confuse the user. In particular, such an image displayed in a head-up display apparatus may cause an unfavorable influence.

### SUMMARY OF THE INVENTION

The present invention provides an image display apparatus capable of enhancing the perceived efficiency of a displayed information image while maintaining high visibility.

An aspect of the present invention provides an image display apparatus including an image data processing unit configured to generate image data for at least one information image, an image forming unit configured to form the information image in a predetermined display area on an image forming plane based on the image data, an importance determination unit configured to determine an importance of the information image, and a level control unit configured to change an enhancement level of the information image based on a determination result of the importance determination unit.

With this configuration, the apparatus can reliably alert a user to an information image having a high importance without impairing visibility. This enhances the perceived efficiency of a displayed information image while high visibility is maintained.

In this aspect, the image display apparatus may further include a gaze detection unit configured to detect a gaze of a user. The importance determination unit may determine the importance based on a detection result of the gaze detection unit.

Such a configuration enables the importance or the enhancement level of an information image to be changed based on a determination as to whether the user views the information image. This further enhances the accuracy of alerting.

In the aspect, the image display apparatus may be installed in a vehicle. The apparatus may further include a traveling condition detection unit configured to detect a traveling condition of the vehicle and surroundings of the vehicle. The importance determination unit may calculate a risk and an urgency based on a detection result of the traveling condition detection unit, and determine the importance based on the risk and the urgency.

With such a configuration, the apparatus can display an information image that contributes to driving safety at accurate and proper timing based on a change in traveling condition or surroundings of the vehicle.

In the aspect, the at least one information image may include a plurality of information images. The importance determination unit may increase the importance of an information image that the user has not viewed for a predetermined time to a level higher than the importances of other information images based on a detection result of the gaze detection unit. The level control unit may increase the enhancement level of the information image in response to an increase of the importance.

Such a configuration achieves an alerting operation with higher accuracy based on an actual perception state of the user.

In the aspect, the importance determination unit may reduce the importance of an information image that the user has viewed to a level lower than the importance determined before the user viewed the information image based on a detection result of the gaze detection unit. The level control unit may reduce the enhancement level of the information image in response to a reduction of the importance.

With such a configuration, the degree to which the user is alerted to an information image that the user is aware of can be reduced and the user's view can be ensured. Thus, the apparatus can reliably alert the user to the other information images.

In the aspect, the importance determination unit may increase the importance of an information image formed outside a central visual field of the user in the display area to a level higher than the importances of information images within the central visual field. The level control unit may increase the enhancement level of the information image formed outside the central visual field of the user.

With such a configuration, the apparatus can alert the user to an information image formed outside the central visual field, although information outside the central visual field is usually difficult to notice. This can promote a reaction to information that is outside the central visual field and is accordingly difficult to notice. This allows the user (driver) to always pay attention to information in front of the driver, thus achieving an enlarged perceivable range of the driver.

Beginner drivers tend to concentrate their attention only on the traveling direction under tension such that the central visual field and the effective visual field narrow and the movement of gaze decreases. They are accordingly likely to be unaware of an external stimulus (alert) in their peripheral visual field. According to the aspect of the present invention, the importance of an information image formed outside the central visual field of the user can be increased to a level higher than those of information images within the central visual field, and the enhancement level of the information image formed outside the central visual field can be increased. Consequently, a proper external stimulus can be applied to the peripheral visual field so that the user perceives the information image formed outside the central visual field. This allows the user to move his or her gaze, thus preventing the user's view from excessively narrowing.

In the aspect, the gaze detection unit may detect a gaze fixation of the user based on the detected gaze. When the detected gaze fixation has remained on at least one of individual images constituting the information image for a predetermined time, the importance determination unit may increase an importance of the individual image to a level higher than importances of other individual images. The level control unit may increase an enhancement level of the individual image.

An individual image on which the gaze fixation remains is an image that the user steadily looks at. Increasing the importance and the enhancement level of the individual image enables the user's attention to be continuously directed to the individual image.

In the aspect, the gaze detection unit may detect a gaze fixation of the user based on the detected gaze. When the detected gaze fixation has remained on at least one of individual images constituting the information image for a predetermined time, the importance determination unit may increase an importance of the individual image to a level higher than importances of other individual images. The image forming unit may form an image of unique information associated with the individual image such that the formed image is in the display area.

An individual image on which the gaze fixation remains is an image that the user steadily looks at. Displaying unique information associated with the individual image can contribute to helping the user to recognize the individual image.

In the aspect, the image forming unit may include a coherent light source configured to emit coherent light to form the information image and an incoherent light source configured to emit incoherent light to form the information image. The image forming unit may use the coherent light source to form the information image having a high enhancement level and uses the incoherent light source to form the information image having a low enhancement level.

Such a configuration reliably enables the user to direct his or her attention to an information image having a high enhancement level rather than an information image having a low enhancement level.

In the aspect, the image forming unit may include a coherent light source configured to emit coherent light to form the information image. The coherent light source may include a mechanism capable of reducing or eliminating a speckle in the coherent light. The speckle in the coherent light may be changed in contrast based on a difference in enhancement level.

An information image can be formed by using only the coherent light source. Since the light source includes such a speckle reducing device capable of reducing or eliminating a speckle in the coherent light, a speckle in any image display area can be reduced or eliminated. In this case, an information image having a low enhancement level can be displayed such that a speckle is reduced or eliminated.

Consequently, the user's attention can be reliably directed to an information image having a high enhancement level by using a difference in intensity of a speckle or the presence or absence of a speckle.

In the aspect, the image forming unit may form the information image such that when the information image has a high enhancement level, the information image has a high brightness and, when the information image has a low enhancement level, the information image has a low brightness.

Such a configuration reliably enables the user to direct his or her attention to an information image having a high enhancement level rather than an information image having a low enhancement level.

In the aspect, the image data processing unit may generate the image data such that when the information image has a high enhancement level, a character or a line included in the information image is thick and, when the information image has a low enhancement level, a character or a line included in the information image is thin.

Such a configuration reliably enables the user to direct his or her attention to an information image having a high enhancement level rather than an information image having a low enhancement level.

In the aspect, the image data processing unit may generate three-dimensional image data for an information image having a high enhancement level and generate two-dimensional or one-dimensional image data for an information image having a low enhancement level.

Such a configuration reliably enables the user to direct his or her attention to an information image having a high enhancement level rather than an information image having a low enhancement level.

### BRIEF DESCRIPTION OF THE DRAWINGS

Fig. 1 is a block diagram of the configuration of an image display apparatus according to an embodiment of the present invention;
Fig. 2 is a block diagram of the configuration of a gaze detection unit in the embodiment of the present invention;
Fig. 3 is a side view illustrating the configuration of an image forming unit in the embodiment of the present invention;
Fig. 4A is a plan view of exemplary display areas, serving as display areas on a screen and display areas on a virtual image forming plane in front of a windshield, in the embodiment of the present invention;
Fig. 4B is a plan view of display areas in a modification; and
Fig. 5 is a flowchart of an exemplary image display process performed by the image display apparatus according to the embodiment of the present invention.

### DESCRIPTION OF THE PREFERRED EMBODIMENTS

An image display apparatus according to an embodiment of the present invention will be described in detail below with reference to the drawings. The image display apparatus according to the present embodiment can be installed in a vehicle. The apparatus may include a gaze detection unit that detects a gaze of a driver, serving as a user, and determine an importance of an information image based on, for example, a detection result of the gaze detection unit and a traveling condition of the vehicle. The image display apparatus further includes an image forming unit. The image forming unit may include a laser light source and an LED light source. The image forming unit can selectively use either of these light sources based on an enhancement level of the information image. The image display apparatus according to the present invention is not limited to the following embodiments, but is applicable to night vision equipment and an AR system, for example.

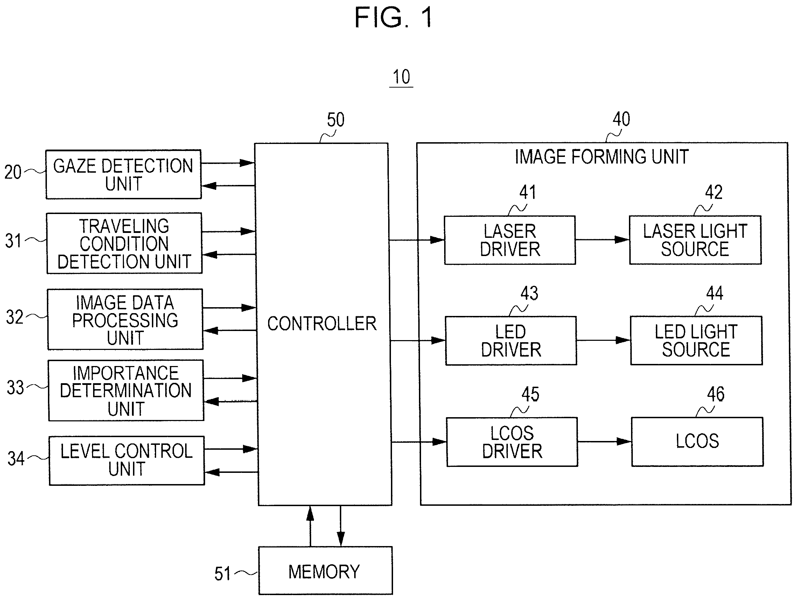

Fig. 1 is a block diagram of the configuration of an image display apparatus 10 according to an embodiment. As illustrated in Fig. 1, the image display apparatus 10 includes a gaze detection unit 20, a traveling condition detection unit 31, an image data processing unit 32, an importance determination unit 33, a level control unit 34, an image forming unit 40, a controller 50, and a memory 51. The controller 50 is connected to the gaze detection unit 20, the traveling condition detection unit 31, the image data processing unit 32, the importance determination unit 33, the level control unit 34, and the image forming unit 40. The controller 50 controls operations of these units. The memory 51, connected to the controller 50, stores information necessary for such control, data that serves as a basis for image data generation for an information image, and detection and determination results of the units.

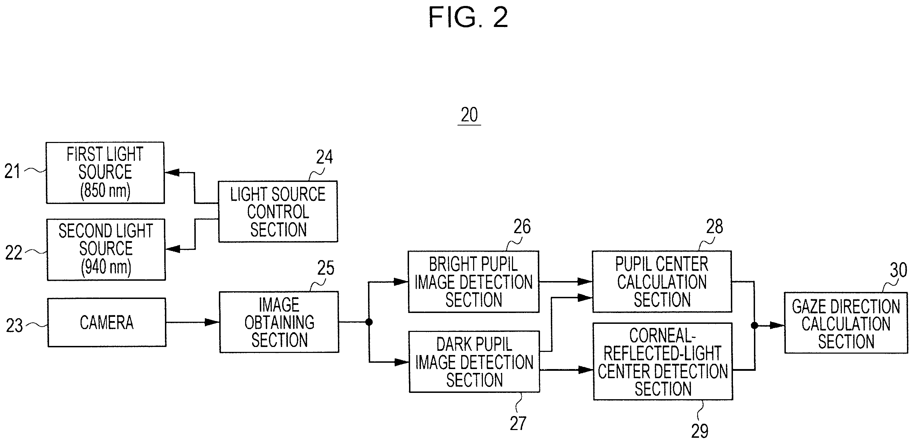

The gaze detection unit 20 will now be described with reference to Fig. 2. Fig. 2 is a block diagram of the configuration of the gaze detection unit 20. The gaze detection unit 20 may have any configuration other than that illustrated in Fig. 2.

As illustrated in Fig. 2, the gaze detection unit 20 includes a first light source 21, a second light source 22, a camera 23, a light source control section 24, an image obtaining section 25, a bright pupil image detection section 26, a dark pupil image detection section 27, a pupil center calculation section 28, a corneal-reflected-light center detection section 29, and a gaze direction calculation section 30. The gaze detection unit 20 is disposed on an instrument panel or upper part of a windshield such that the gaze detection unit 20 faces a driver's seat.

Each of the first light source 21 and the second light source 22 is an LED light source. The first light source 21 emits, as detection light, infrared light (near-infrared light) having a wavelength of 850 nm or approximate thereto. The second light source 22 emits, as detection light, infrared light having a wavelength of 940 nm. The infrared light (near-infrared light) having a wavelength of 850 nm or approximate thereto is poorly absorbed by water in an eyeball of a human, such that the amount of light that reaches and is reflected by a retina located at the back of the eyeball is large. In contrast, the infrared light having a wavelength of 940 nm is easily absorbed by water in an eyeball of a human, such that the amount of light that reaches and is reflected by a retina at the back of the eyeball is small.

The camera 23 includes an imaging device and a lens. The imaging device includes a complementary metal-oxide semiconductor (CMOS) device or a charge-coupled device (CCD). The imaging device obtains a driver's face image including eyes through the lens. The imaging device includes a two-dimensional array of pixels to detect light.

The light source control section 24, the image obtaining section 25, the bright pupil image detection section 26, the dark pupil image detection section 27, the pupil center calculation section 28, the corneal-reflected-light center detection section 29, and the gaze direction calculation section 30 are achieved by, for example, arithmetic circuits of a computer. Causing the computer to execute installed software programs achieves calculations in the respective sections.

The light source control section 24 switches between light emission by the first light source 21 and that by the second light source 22 and controls a light emission time of each of the first light source 21 and the second light source 22.

The image obtaining section 25 obtains face images from the camera 23 on a frame-by-frame basis. The images obtained by the image obtaining section 25 are read on a frame-by-frame basis by the bright pupil image detection section 26 and the dark pupil image detection section 27. The bright pupil image detection section 26 detects a bright pupil image. The dark pupil image detection section 27 obtains a dark pupil image. The pupil center calculation section 28 calculates a difference between the bright pupil image and the dark pupil image to generate an image in which a pupil image is brightly displayed, and calculates the center (hereinafter, "pupil center") of the pupil image from the generated image. The corneal-reflected-light center detection section 29 extracts light (hereinafter, "corneal reflected light") reflected by a cornea from the dark pupil image and calculates the center of the corneal reflected light. The gaze direction calculation section 30 calculates a gaze direction based on the pupil center calculated by the pupil center calculation section 28 and the center of the corneal reflected light calculated by the corneal-reflected-light center detection section 29. In addition, the gaze direction calculation section 30 calculates an angle formed by gaze directions of both eyes of a driver as a direction to a gaze fixation.

The components, except for the gaze detection unit 20, of the image display apparatus 10 will now be described.

The traveling condition detection unit 31 detects traveling conditions of a vehicle and surroundings of the vehicle based on detection results of, for example, a speed sensor and a steering angle sensor arranged in the vehicle, map information, and information obtained from a global positioning system (GPS) and various traffic information items. Examples of the traveling conditions include a traveling speed of the vehicle that the driver is driving and a steering angle of the vehicle. Examples of the surroundings include the position of the vehicle that the driver is driving, the shape of a road on which the vehicle is traveling, a traffic congestion level of the road, traveling conditions of surrounding vehicles, and traffic surroundings, such as traffic signals.

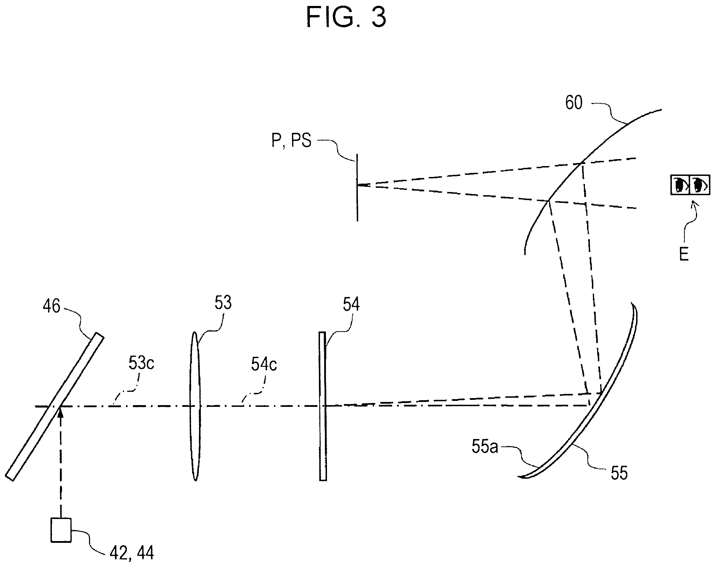

The image data processing unit 32 is an arithmetic circuit that generates image data for an information image to be formed in a display area on an image forming plane (e.g., a screen 54, a windshield 60, and a virtual image forming plane PS in Fig. 3). The image forming unit 40 forms an information image in the display area on the image forming plane based on image data generated by the image data processing unit 32.

As illustrated in Fig. 1, the image forming unit 40 includes a laser driver 41, a laser light source 42, an LED driver 43, an LED light source 44, a liquid-crystal-on-silicon (LCOS) driver 45, and an LCOS 46. As illustrated in Fig. 3, the image forming unit 40 further includes a lens 53, the screen 54, a mirror 55, and the windshield 60. The image forming unit 40 is included in a head-up display apparatus. Fig. 3 is a side view illustrating the configuration of the image forming unit 40. The image forming unit 40 may have any configuration other than that illustrated in Fig. 3. The image forming unit 40 can be included in, for example, night vision equipment or an AR system.

The laser light source 42 is a coherent light source that emits coherent light to form an information image in the display area. The laser light source 42 is driven by the laser driver 41 under the control of the controller 50. As regards a beam oscillation mode of the laser light source 42, a single mode is preferably used in terms of coherence.

The LED light source 44 is an incoherent light source that emits incoherent light to form an information image in the display area. The LED light source 44 is driven by the LED driver 43 under the control of the controller 50.

An information image formed with coherent light emitted from the laser light source 42 is an image having a high enhancement level. An information image formed with incoherent light emitted from the LED light source 44 is an image having a lower enhancement level than an image formed with laser light from the laser light source 42.

In some embodiments, the laser light source 42 includes a speckle reducing mechanism capable of reducing or eliminating a speckle in emitted light. Examples of speckle reducing devices include a device that changes an oscillation mode or the wavelength of light to be emitted and an optical filter to be disposed on an optical path of emitted light. With the speckle reducing device, the intensity of a speckle or the presence or absence of a speckle can be controlled based on the enhancement level of an information image.

Instead of the combination of the laser light source 42 and the LED light source 44, any other combination may be used, provided that an image can be formed such that whether the enhancement level of the image is high or low can be determined. For example, the two light sources may be two laser light sources having different oscillation modes to provide a difference in coherence. The two light sources may be two laser light sources or two LED light sources configured such that the intensity or waveform of light emitted from one light source differs from that of light emitted from the other light source.

The LCOS 46, which is a reflective LCOS, is a panel including a liquid crystal layer and an electrode layer of aluminum, for example. The LCOS 46 includes a regular array of electrodes for applying an electric field to the liquid crystal layer such that the electrodes correspond to individual pixels. A change in intensity of the electric field applied to each electrode causes a change in tilt angle of liquid crystal molecules in a thickness direction of the liquid crystal layer, so that the phase of reflected laser light is modulated for each pixel.

Such a change in phase for each pixel is controlled by the LCOS driver 45 under the control of the controller 50. The LCOS 46 produces light (hereinafter, "phase-modulated light") subjected to predetermined phase modulation. The LCOS 46 is movable or rotatable relative to a main body (not illustrated) of the image display apparatus 10 under the control of the controller 50.

Instead of the LCOS 46, a transmissive LCOS or any other modulating device may be used, provided that phase modulation can be performed. Furthermore, instead of the LCOS 46, a scanner capable of scanning incident light may be used to cause laser light to enter the lens 53. Examples of the scanner include a digital mirror device (DMD) and a device including a polygon mirror.

The phase-modulated light produced by the LCOS 46 enters the lens 53, serving as an image forming lens. The lens 53 is a biconvex positive lens. The lens 53, serving as a Fourier transform (FT) lens, Fourier-transforms incoming light and converges the light, thereby producing image light. The image light is formed as an intermediate image (hologram image) on the screen 54. The screen 54 is disposed such that its optical axis 54c coincides with an extension of an optical axis 53c of the lens 53. The screen 54 is, for example, a diffuser (diffuser panel) that causes incoming light to emerge as diffused light. The lens 53 is movable along the optical axis 53c under the control of the controller 50. The screen 54 is movable along the optical axis 54c under the control of the controller 50.

Instead of the lens 53, any other positive refractive lens having any other shape or a positive refractive optical system including multiple lenses may be used, provided that Fourier transform for phase-modulated light can be performed.

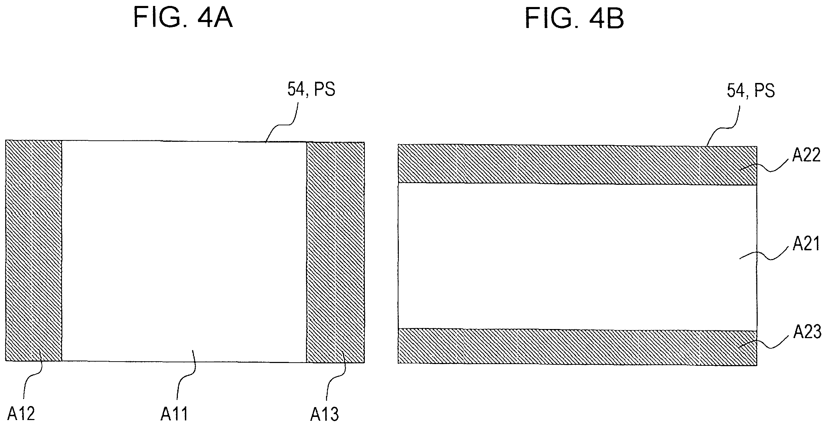

Fig. 4A is a plan view illustrating exemplary display areas on the screen 54 and exemplary display areas on the virtual image forming plane PS virtually provided at a position P (Fig. 3) in front of the windshield 60 in the present embodiment. Fig. 4B is a plan view illustrating display areas in a modification of the present embodiment.

The image forming unit 40 forms, based on image data for information images output from the image data processing unit 32, the information images in display areas All, A12, and A13 (Fig. 4A) on the screen 54, corresponding display areas on the windshield 60, and corresponding display areas on the virtual image forming plane PS virtually provided at the position P in front of the windshield 60. The screen 54, the windshield 60, and the virtual image forming plane PS each define an image forming plane.

Light passed through the screen 54, serving as diffused light, is projected onto the mirror 55 and thus enters the mirror 55. The mirror 55 has a reflecting surface 55a that is a concave mirror (magnifier). The projected light including hologram images formed on the screen 54 is magnified and reflected by the mirror 55. The reflected light is projected onto the display areas on the windshield 60 of the vehicle. The windshield 60 functions as a semi-reflective surface, so that the incident image light is reflected toward the driver and virtual images are formed in the display areas on the virtual image forming plane PS at the position P in front of the windshield 60. By looking at the virtual images in front of the windshield 60, the driver views the information images with eyes E such that the information images appear to be displayed above and in front of a steering wheel. Under the control of the controller 50, the mirror 55 can change the distance between the mirror 55 and the screen 54 or the windshield 60.

The importance determination unit 33 is an arithmetic circuit that determines an importance of an information image. The level control unit 34 is an arithmetic circuit that changes an enhancement level of the information image based on a determination result of the importance determination unit 33. The level control unit 34 outputs an arithmetic result to the controller 50. As will be described below, an enhancement level is changed based on an importance determination result. Examples of importance determination and examples of importance-based level control will now be described.

In some embodiments, the importance determination unit 33 obtains, as information for an information image, a detection result of the traveling condition detection unit 31, calculates a risk and an urgency based on the detection result, and determines an importance based on the risk and the urgency. When either the risk or the urgency is high, the importance determination unit 33 determines that the information image has a high importance. Although importance determination is performed irrespective of a gaze state of the driver, importance determination may be performed in consideration of a detection result of the gaze detection unit 20. It is preferred that at least two levels be provided for each of the importance, the risk, the urgency, and the enhancement level.

The risk is determined based on a determination as to the presence or absence of an object that can cause a vehicle accident. Examples of such determinations include (a) determining the presence or absence of a pedestrian and/or a bicycle around or ahead of the vehicle and the presence or absence of a vehicle ahead of the vehicle, (b) determining the presence or absence of dangerous driving (e.g., drowsy driving or weaving) of a vehicle ahead of the vehicle, (c) determining whether a traffic signal ahead of the vehicle is red, and (d) determining the presence or absence of a large obstruction or fallen object that may interfere with the travel of the vehicle.

A risk in a configuration in which the image display apparatus 10 is not installed in a vehicle may be determined based on a determination as to the presence or absence of an object that can be dangerous to a user.

Examples of the urgency include (a) the distance between the vehicle that the driver is driving and an object, such as a pedestrian, a bicycle, a vehicle ahead of the vehicle, or an obstruction and (b) the time taken for the vehicle to reach a distance limit at which the vehicle can safely avoid the object. The distance limit is determined based on a distance to the object and a vehicle speed. Since the distance limit varies depending on the size or moving speed of an object, the time taken for the vehicle to reach a distance limit for an object closest to the vehicle is not always shortest.

Urgency information is used for importance determination, enhancement level setting, and the like. In addition, this information is provided to a vehicle brake assist system.

In some embodiments, the importance determination unit 33 obtains, as information for an information image, a detection result indicating gaze directions from the gaze detection unit 20, and determines (or controls) an importance based on the detection result in any of the following manners (1) to (3).
(1) The importance determination unit 33 increases the importance of an information image that the driver has not viewed for a predetermined time to a level higher than the importances of other information images. Any predetermined time can be set based on a traveling condition, for example. It is preferred that the higher the vehicle traveling speed, the shorter the predetermined time.
(2) In addition to or instead of the above-described determination (1), the importance determination unit 33 reduces the importance of an information image that the driver has viewed to a level lower than the importance determined before the driver viewed the information image. It is preferred to continuously perform this determination while the driver is in the vehicle.
(3) The importance determination unit 33 increases the importance of an information image formed outside the central visual field of the driver in the display areas to a level higher than the importances of information images within the central visual field. For the central visual field, a typical visual field range is applied to the display areas. Referring to Fig. 4A, the central display area A11 and the two display areas A12 and A13 on the left and right sides of the area A11 are set in the screen 54 or on the virtual image forming plane PS. The central display area A11 corresponds to the central visual field of the driver facing front. The display areas A12 and A13 are regions outside the central visual field. Enhancement levels may be set such that an enhancement level for a region within the effective visual field differs from that for a region outside the effective visual field.

In some embodiments, the level control unit 34 changes an enhancement level based on an importance determination result based on a detection result of the gaze detection unit 20, as described above in (1) to (3), or an importance determination result based on the above-described risk and urgency in any of the following manners (i) to (v).
(i) The level control unit 34 increases the enhancement level of an information image in response to an increase of the importance thereof. The level control unit 34 reduces the enhancement level of an information image in response to a reduction of the importance thereof. The level control unit 34 may increase the enhancement level of an information image having a high importance and maintain the enhancement level of an information image having a low importance. The level control unit 34 may maintain the enhancement level of an information image having a high importance and reduce the enhancement level of an information image having a low importance.
(ii) The level control unit 34 increases the enhancement level of an information image formed outside the central visual field of the driver. In the case of Fig. 4A, the image data processing unit 32 generates image data such that the enhancement levels of information images formed in the display areas A12 and A13 corresponding to regions outside the central visual field are higher than the enhancement level of an information image formed in the display area A11 corresponding to the central visual field.

In the case of Fig. 4A, the central display area A11 corresponds to the central visual field of the driver and the two display areas A12 and A13 on the left and right sides of the area A11 are set to the regions outside the central visual field. As illustrated in Fig. 4B, a display area A21 located at central part of the screen 54 (the virtual image forming plane PS) in its top-bottom direction may correspond to the central visual field and two display areas A22 and A23 on upper and lower sides of the area A21 may be set to regions outside the central visual field. The area and position of the display area corresponding to the central visual field and those of the display areas corresponding to the regions outside the central visual field are not limited to those illustrated in Figs. 4A and 4B.
(iii) The level control unit 34 increases the enhancement level of an information image that the driver has not directed his or her gaze to for a predetermined time or on which a gaze fixation has not remained for the predetermined time. Preferably, the level control unit 34 increases the enhancement level of such an information image, regardless of the risk or the urgency. When the driver views this information image, the level control unit 34 reduces the enhancement level.
(iv) The level control unit 34 increases the enhancement level of an information image determined as being gazed at for a predetermined time by the driver.
(v) After the importance of an information image is increased, the level control unit 34 may maintain the enhancement level of the information image while the driver directs his or her gaze or gazes at this information image. If the driver has not direct his or her gaze to the information image for a certain time, the level control unit 34 may increase the enhancement level of the information image.

The enhancement level can be increased or reduced in any of the following manners (A) to (G).
(A) The enhancement level is increased or reduced by using a difference in intensity of a speckle in light emitted from a light source for information image formation or the presence or absence of such a speckle. A speckle is formed as an image on the retina of an eye. Such characteristics can be used to cause a driver to perceive an information image, regardless of the focus of the eyes of the driver. Using a speckle to increase or reduce the enhancement level can improve alert indication to a driver and perceived efficiency. It is preferred that an information image with no speckle or with a sufficiently low speckle have a speckle contrast Cs less than 0.1. The speckle contrast Cs is expressed by Cs = σ/I where σ denotes the standard deviation of brightnesses (light intensities) of pixels of a displayed information image and I denotes the mean value of the brightnesses (light intensities).

As examples of setting the enhancement level in the above-described manner (A), an image formed with a light source that causes a high-intensity speckle or causes a speckle is used as an individual image having a high enhancement level, and an image formed with a light source that causes a low-intensity speckle or causes no speckle is used as an individual image having a low enhancement level. More specifically, (a) a laser light source that causes a speckle is used to form an individual image having a high enhancement level, and an LED light source that causes little speckle is used to form an individual image having a low enhancement level. Furthermore, (b) a single-mode laser light source that causes a high-intensity speckle can be used to form an individual image having a high enhancement level, and a multi-mode or ring-mode laser light source that causes a low-intensity speckle can be used to form an individual image having a low enhancement level. Additionally, (c) a technique for reducing a speckle, for example, the highfrequency superposition method or the depolarization method can be used to form an individual image having a low enhancement level.
(B) The brightness of an individual image having a high enhancement level is increased, whereas the brightness of an individual image having a low enhancement level is reduced. The brightness of an individual image having a low enhancement level can be set to zero such that the image is not displayed.
(C) Image data is generated such that a character or a line included in an individual image having a high enhancement level is thick and a character or a line included in an individual image having a low enhancement level is thin. Furthermore, the color of a character or a line included in an individual image may be used to indicate a high or low enhancement level. For example, the color of a character or a line included in an individual image having a high enhancement level may have a higher contrast than the surrounding colors, whereas the color of a character or a line included in an individual image having a low enhancement level may be similar to the surrounding colors.
(D) An individual image having a high enhancement level may be generated as three-dimensional image data, whereas an individual image having a low enhancement level may be generated as two-dimensional or one-dimensional image data.
(E) As regards an individual image with an increased importance included in an information image, an image of unique information associated with this individual image is formed in a display area to increase the enhancement level of the individual image. Examples of the unique information include a character and a picture used in the individual image and information that is associated with the individual image and is stored in the memory 51.
(F) An individual image having a high enhancement level is modified with an additional decoration item. Examples of displaying a decoration item include displaying a frame-shaped image that surrounds an individual image and applying a certain color to the whole of an individual image.
(G) The above-described manners (A) to (F) may be combined. Changing an enhancement level based on the level of risk or urgency can reduce a burden on the driver.

In the above-described manners (A) to (E), a target information image is allowed to have a high or low enhancement level. Instead of or in addition to the high and low enhancement levels, the display areas may be divided into a highlighted display area and a normal display area such that text information associated with an information image having a high importance is displayed with a high enhancement level in the highlighted display area. The highlighted display area may be set at any position and have any area such that the highlighted display area does not interfere with a driving operation. Furthermore, multiple highlighted display areas may be arranged.

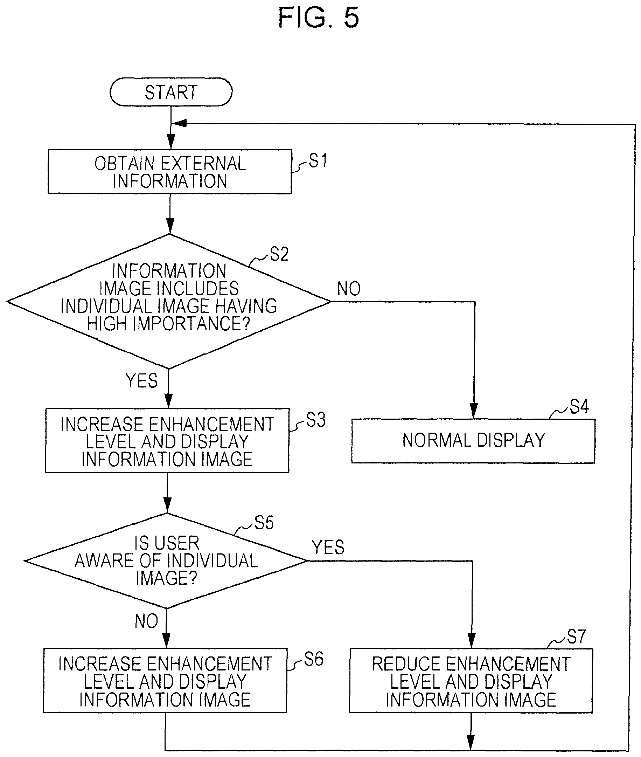

Fig. 5 is a flowchart of an exemplary image display process performed by the image display apparatus 10 according to the present embodiment.

External information, namely, a detection result of the gaze detection unit 20 and a detection result of the traveling condition detection unit 31 are obtained (step S1). The controller 50 determines, based on the obtained detection results, at least one information image to be displayed.

The controller 50 causes the importance determination unit 33 to determine the importances of images (individual images), constituting the information image, based on the detection result of the gaze detection unit 20 and the detection result of the traveling condition detection unit 31 (step S2).

If the information image includes an individual image determined as having a high importance in step S2 (YES in step S2), the controller 50 instructs the level control unit 34 to increase an enhancement level of the individual image. The level control unit 34 increases the enhancement level and stores the increased level in the memory 51 such that the level is associated with the individual image. In addition, the controller 50 instructs the image data processing unit 32 to generate image data about the entire information image and causes the image forming unit 40 to form (display) an image based on the generated image data (step S3).

After the enhancement level is increased, the controller 50 may proceed to step S5 without instructing the image data processing unit 32 to generate image data.

If it is determined in step S2 that none of the individual images have a high importance (NO in step S2), the controller 50 does not instruct the level control unit 34 to change an enhancement level of the information image. The controller 50 instructs the image data processing unit 32 to generate image data and causes the image forming unit 40 to form (display) a normal image, in which the enhancement level is not changed, based on the generated image data (step S4).

After display in step S3, based on a detection result of the gaze detection unit 20, the controller 50 determines for each of the individual images constituting the information image whether the driver has viewed the individual image for a predetermined time (step S5).

If there is an individual image that the driver, serving as a user, has not viewed for the predetermined time, the controller 50 determines that the driver is not aware of the individual image (NO in step S5) and instructs the importance determination unit 33 to increase the importance of the individual image. Furthermore, the controller 50 instructs the level control unit 34 to increase an enhancement level of the individual image. The level control unit 34 increases the enhancement level and stores the increased level in the memory 51 such that the level is associated with the individual image. The controller 50 instructs the image data processing unit 32 to generate image data about the entire information image and causes the image forming unit 40 to form (display) an image based on the generated image data (step S6).

If the driver has viewed the individual image for the predetermined time, the controller 50 determines that the driver is aware of the individual image (YES in step S5) and instructs the importance determination unit 33 to reduce the importance of the individual image. After that, the controller 50 instructs the level control unit 34 to reduce an enhancement level of the individual image. In response to such an instruction, the level control unit 34 reduces the enhancement level of the individual image and stores the reduced level in the memory 51 such that the level is associated with the individual image. The controller 50 instructs the image data processing unit 32 to generate image data about the entire information image and causes the image forming unit 40 to form (display) an image based on the generated image data (step S7).

In step S7, the enhancement level of each of the individual images that the driver is aware of is reduced and the resultant information image is displayed, thus highlighting an individual image that the driver is unaware of. If there is a sufficient difference in display between an individual image that the driver is aware of and an individual image that the driver is unaware of, normal display may be performed without reduction of the importance and the enhancement level in step S7.

When activated, the image display apparatus 10 starts the above-described process including steps S1 to S7. The apparatus repeatedly performs the process. The apparatus terminates the process in response to a terminating operation by the driver, for example, shutting down the engine of the vehicle.

With the above-described configurations, the above-described embodiments and modification provide the following advantages.
(1) Since the importance of each information image is determined and the enhancement level of the information image to be displayed is changed based on a determination result, the image display apparatus reliably alerts the user to an information image having a high importance. This enhances the perceived efficiency of a displayed information image while high visibility is maintained without being impaired.

If a displayed image is part of an AR scene or the like, the enhancement level of each information image can be changed based on the importance thereof. The image display apparatus reliably alerts the user to an information image having a high importance without obstructing the user's view.
(2) The importance of an information image may be determined based on a detection result of the gaze detection unit 20. Since the importance or the enhancement level of the information image can be changed based on a determination as to whether the user views the information image, the accuracy of alerting can be further enhanced.
(3) A risk and an urgency may be calculated based on a detection result of the traveling condition detection unit 31 and the importances of information images may be determined based on the risk and the urgency. Consequently, an information image that contributes to driving safety can be displayed at accurate and proper timing based on a change in traveling condition or surroundings of the vehicle.

In this case, based on a detection result of the gaze detection unit 20, the importance of an information image that the user has not viewed for the predetermined time may be increased to a level higher than those of the other information images. The level control unit 34 may increase the enhancement level of the information image in response to an increase of the importance. This achieves an alerting operation with higher accuracy based on an actual perception state of the user.

In addition, based on a detection result of the gaze detection unit 20, the importance of an information image that the user has viewed may be reduced to a level lower than the importance determined before the user viewed the information image. The enhancement level of the information image may be reduced in response to a reduction of the importance. Consequently, the degree to which the user is alerted to an information image that the user is aware of can be reduced. Thus, the image display apparatus can reliably alert the user to the other information images.
(4) The importance of an information image formed outside the central visual field of the user in the display area may be increased to a level higher than the importances of information images within the central visual field. The enhancement level of the information image formed outside the central visual field of the user may be increased. Thus, the image display apparatus can alert the user to the information image formed outside the central visual field, although the user does not tend to direct his or her gaze to the information image outside the central visual field. This prevents a user's viewing range from narrowing as the vehicle travels.
(5) If a gaze fixation detected by the gaze detection unit 20 has remained on at least one of individual images constituting an information image for a predetermined time, an importance of the individual image may be increased to a level higher than importances of other individual images. The level control unit 34 may increase an enhancement level of the individual image in response to an increase of the importance. The image forming unit 40 may form an image of unique information associated with the individual image such that the formed image is in the display area.

An individual image on which the gaze fixation remains is an image that the user steadily looks at. Increasing the importance and the enhancement level of the individual image enables the user's attention to be continuously directed to the individual image.
(6) The image forming unit 40 may use the laser light source 42, serving as a coherent light source, to form an information image having a high enhancement level and use the LED light source 44, serving as an incoherent light source, to form an information image having a low enhancement level. By using a difference in intensity of a speckle or the presence or absence of a speckle, the image display apparatus reliably enables the user to be aware of an information image having a high enhancement level, regardless of the focus of the eyes of the user. Thus, the perceived efficiency can be enhanced.
(7) The image forming unit 40 may form the information image such that when the information image has a high enhancement level, the information image has a high brightness and, when the information image has a low enhancement level, the information image has a low brightness. Furthermore, the image data processing unit 32 may generate the image data such that when the information image has a high enhancement level, a character or a line included in the information image is thick and, when the information image has a low enhancement level, a character or a line included in the information image is thin. In addition, the image data processing unit 32 may generate three-dimensional image data for an information image having a high enhancement level and generate two-dimensional or one-dimensional image data for an information image having a low enhancement level.

Such a configuration can reduce the degree at which the user is alerted to an information image that the user is aware of and ensure the user's view. Thus, the image display apparatus can reliably alert the user to the other information images.

While the present invention has been described with reference to the above-described embodiments, the present invention is not limited to the embodiments, but may be altered or modified within the purposes of the improvement or the scope of the spirit of the present invention.

As described above, the image display apparatus according to any of the embodiments of the present invention is useful in allowing a user to easily notice a displayed information image.

## Claims

1. An image display apparatus (10) comprising:
an image data processing unit (32) configured to generate image data for at least one information image;
an image forming unit (40) configured to form the information image in a predetermined display area on an image forming plane based on the image data;
an importance determination unit (33) configured to determine an importance of the information image; and
a level control unit (34) configured to change an enhancement level of the information image based on a determination result of the importance determination unit.

2. The apparatus according to Claim 1, further comprising:
a gaze detection unit (20) configured to detect a gaze of a user,
wherein the importance determination unit determines the importance based on a detection result of the gaze detection unit.

3. The apparatus according to Claim 1 or 2,
wherein the image display apparatus is installed in a vehicle,
wherein the image display apparatus further comprises a traveling condition detection unit (31) configured to detect a traveling condition of the vehicle and surroundings of the vehicle, and
wherein the importance determination unit calculates a risk and an urgency based on a detection result of the traveling condition detection unit, and determines the importance based on the risk and the urgency.

4. The apparatus according to Claim 2 or 3,
wherein the at least one information image includes a plurality of information images,
wherein the importance determination unit increases the importance of an information image that the user has not viewed for a predetermined time to a level higher than the importances of other information images based on a detection result of the gaze detection unit, and
wherein the level control unit increases the enhancement level of the information image in response to an increase of the importance.

5. The apparatus according to Claim 4,
wherein the importance determination unit reduces the importance of an information image that the user has viewed to a level lower than the importance determined before the user viewed the information image based on a detection result of the gaze detection unit, and
wherein the level control unit reduces the enhancement level of the information image in response to a reduction of the importance.

6. The apparatus according to anyone of Claims 2 to 5,
wherein the at least one information image includes a plurality of information images,
wherein the importance determination unit increases the importance of an information image formed outside a central visual field of the user in the display area to a level higher than the importances of information images within the central visual field, and
wherein the level control unit increases the enhancement level of the information image formed outside the central visual field of the user.

7. The apparatus according to anyone of Claims 2 to 6,
wherein the gaze detection unit detects a gaze fixation of the user based on the detected gaze,
wherein when the detected gaze fixation has remained on at least one of individual images constituting the information image for a predetermined time, the importance determination unit increases an importance of the individual image to a level higher than importances of other individual images, and
wherein the level control unit increases an enhancement level of the individual image.

8. The apparatus according to anyone of Claims 2 to 7,
wherein the gaze detection unit detects a gaze fixation of the user based on the detected gaze,
wherein when the detected gaze fixation has remained on at least one of individual images constituting the information image for a predetermined time, the importance determination unit increases an importance of the individual image to a level higher than importances of other individual images, and
wherein the image forming unit forms an image of unique information associated with the individual image such that the formed image is in the display area.

9. The apparatus according to any one of Claims 1 to 8,
wherein the image forming unit includes
a coherent light source (42) configured to emit coherent light to form the information image, and
an incoherent light source (44) configured to emit incoherent light to form the information image, and
wherein the image forming unit uses the coherent light source to form the information image having a high enhancement level and uses the incoherent light source to form the information image having a low enhancement level.

10. The apparatus according to any one of Claims 1 to 9, wherein the image forming unit includes a coherent light source configured to emit coherent light to form the information image, the coherent light source includes a mechanism capable of reducing or eliminating a speckle in the coherent light, and the speckle in the coherent light is changed in contrast based on a difference in enhancement level.

11. The apparatus according to any one of Claims 1 to 10, wherein the image forming unit forms the information image such that when the information image has a high enhancement level, the information image has a high brightness and, when the information image has a low enhancement level, the information image has a low brightness.

12. The apparatus according to any one of Claims 1 to 11, wherein the image data processing unit generates the image data such that when the information image has a high enhancement level, a character or a line included in the information image is thick and, when the information image has a low enhancement level, a character or a line included in the information image is thin.

13. The apparatus according to any one of Claims 1 to 12, wherein the image data processing unit generates three-dimensional image data for the information image having a high enhancement level and generates two-dimensional or one-dimensional image data for the information image having a low enhancement level.
